# EUROPÄISCHE PATENTANMELDUNG

(11) **EP 0 806 233 A1**
(43) Veröffentlichungstag der Anmeldung: **12.11.1997**
(21) Anmeldenummer: 97106869.7
(22) Anmeldetag: 25.04.1997
(51) Int. Cl.: B01D 46/24, B01D 46/26

(54) **Produktabscheider**

(30) Priorität: 07.05.1996 DE 19618198
(71) Anmelder: Dieckmann, Peter, 24568 Kaltenkirchen (DE)
(72) Erfinder: Dieckmann, Peter, 24568 Kaltenkirchen (DE)
(74) Vertreter: Thomas, Götz

(57) **Zusammenfassung**

Die Erfindung betrifft einen Produktabscheider (2) zur Abscheidung von Feststoffpartikeln aus einem Gasstrom, mit einem Gehäuse (6) und mindestens einer im Gehäuse (6) angeordneten, vom Gasstrom von außen nach innen durchströmten, im wesentlichen zylindrischen Filterpatrone (14), wobei mindestens ein Teil des Gasstroms vor dem Hindurchtritt durch die Filterpatrone (14) im Inneren des Gehäuses (6) an der Filterpatrone (14) vorbei nach unten geführt wird, und wobei die Filterpatrone (14) zur Reinigung von innen her mit Druckluft beaufschlagbar ist. Um die Reinigungswirkung der Druckluft zu verbessern, wird diese jeweils nur einem Teil des Umfangs der Filterpatrone (14) zugeführt, der unter einem spitzen Winkel zum Gasstrom schräg nach unten weist. Gleichzeitig ist die Filterpatrone (14) um eine im wesentlichen horizontale Drehachse (12) drehbar, so daß schrittweise nacheinander ihr gesamter Umfang abgereinigt werden kann.

## Beschreibung

Die Erfindung betrifft einen Produktabscheider zur Abscheidung von Feststoffpartikeln aus einem Gasstrom, mit einem Gehäuse und mindestens einer im Gehäuse angeordneten, vom Gasstrom von außen nach innen durchströmten, im wesentlichen zylindrischen Filterpatrone, wobei mindestens ein Teil des Gasstroms vor dem Hindurchtritt durch die Filterpatrone im Inneren des Gehäuses an der Filterpatrone vorbei nach unten geführt wird, und wobei die Filterpatrone zur Reinigung von innen her mit Druckluft beaufschlagbar ist.

Produktabscheider mit zylindrischen Filterpatronen werden in zunehmendem Umfang zur Trockenreinigung staubbeladener Gasströme eingesetzt, zum einen, weil insbesondere bei Verwendung von Filterpatronen mit sternförmig gefaltetem Filtermaterial das Verhältnis zwischen Filterfläche und Raumbedarf äußerst günstig ist, und zum anderen, weil sich die Filterpatronen ohne Verwendung von Werkzeugen einfach und berührungsfrei austauschen lassen, was insbesondere bei toxischen oder gefährlichen Produkten von Vorteil ist.

Unter der Bezeichnung Optiflo wird von der AAF-Luftreinigungssysteme GmbH, einer Tochterfirma von Snyder General bereits ein Produktabscheider der eingangs genannten Art vertrieben, bei dem die zylindrischen Filterpatronen in mehreren Reihen neben- und/oder übereinander horizontal im Gehäuse angeordnet sind. Der produktbeladene Gasstrom tritt dort an der Oberseite des Gehäuses ein und bewegt sich im Gehäuse abwärts, wobei er von außen nach innen durch die Filterpatronen strömt. Dabei werden die Feststoffpartikel an der Außenseite der Filterpatronen abgelagert und die gereinigte Luft entweicht durch eine stirnseitige Luftaustrittsöffnung in eine Reingassammelkammer. Die Abreinigung der Filterpatronen erfolgt mit Druckluft, die reingasseitig unter einem hohen Druck in die Filterpatronen eingeblasen wird. Die Druckluft trifft die gesamte Filterpatrone in einer Art Schockwelle und löst so die Feststoffpartikel von der Außenseite des Filtermaterials.

Weiter ist von der Fa. Donaldson Torit unter der Bezeichnung Downflo-Staubabscheider ein Produktabscheider der eingangs genannten Art mit schrägstehenden Filterpatronen bekannt (Schüttgut 2 (1996), Nr. 1, S. 122), bei dem das Filtersystem ebenfalls von oben nach unten von dem mit Feststoffpartikeln beladenen Gas durchströmt wird, nachdem es von einem oberhalb der Filterpatronen angeordneten Deflektor zu deren Seiten hin abgelenkt worden ist. Die Feststoffpartikel sammeln sich auf den Außenflächen der Filterpatronen und werden mit Druckluft abgeblasen, die durch die Stirnenden der Patronen eintritt und die Feststoffpartikel beim Hindurchtritt durch das Filtermaterial mitreißt.

Der Vorteil des Optiflo- und Downflo-Systems gegenüber herkömmlichen Produktabscheidern mit einem von unten nach oben vom Gas durchströmten Gehäuse und darin angeordneten Filterpatronen mit Druckluftreinigung besteht darin, daß die abgereinigten Feststoffpartikel in Richtung der Schwerkraft vom Gasstrom nach unten mitgeführt werden, so daß der Anteil der Feststoffpartikel verringert wird, die nach der Abreinigung erneut an der Oberfläche der Filterpatronen abgeschieden werden. Jedoch weisen beide Systeme noch immer zwei Nachteile auf: zum einen werden die von der Reinigungsdruckluft auf der Oberseite der Filterpatronen nach oben abgeblasenen Feststoffpartikel vom abwärtsgeführten Gasstrom wieder nach unten in Richtung der Filterpatronen mitgeführt, so daß sie sich erneut auf deren Oberseiten absetzen und nicht zu dem unterhalb der Filterpatronen angeordneten Sammelbehälter gelangen, zum anderen wird bei übereinander angeordneten Filterpatronen ein Teil der an einer oberen Filterpatrone abgereinigten Feststoffpartikel vom Gasstrom nach unten zu der oder den darunterliegenden Filterpatronen mitgeführt, so daß die Feststoffpartikel dort erneut abgeschieden werden. Das heißt, die Reinigungswirkung der Druckluft ist auch beim Optiflo- und Downflo-System nicht optimal.

Ein weiterer Nachteil des Optiflo- und Downflo-Systems besteht darin, daß bei einer stirnseitigen Einblasung von Druckluft in die Filterpatronen zum Erreichen einer ausreichenden Reinigungsleistung sehr starke Druckluftstöße erforderlich sind. Diese müssen mit zunehmendem Durchmesser der verwendeten Filterpatronen, d.h. mit zunehmender Filterfläche größer werden, was einer Verwendung von Großraumfilterpatronen und damit einer Verringerung der Anzahl von Filterpatronen bei vorgegebener Filterfläche im Wege steht. Vgl. W.-P. Frenzel und G. Ritscher "Leistungsvergleich von Filterpatronen unter Berücksichtigung der Staubart", Schüttgut 2 (1996), Nr. 1, S. 61 bis 65.

Aus der DE-A 37 30 980 ist bereits ein Filter für Staub und Fasern enthaltende Abluftströme in Textilfabriken an sich bekannt, der sich um eine horizontale Drehachse drehen läßt. Der im Querschnitt polygonale Filter besteht dort aus plattenförmigen Filterelementen mit einem zickzackförmigen Filtermaterial und wird von seiner einen Stirnseite her in axialer Richtung mit dem produktbeladenen Gasstrom beaufschlagt. Zur Reinigung bewegen sich die Filterelemente in Drehrichtung zwischen einer im Inneren des Staubfilters angeordneten, nach außen weisenden und mit Druckluft beaufschlagbaren Blasdüse und einem der Blasdüse gegenüberliegend auf der Außenseite des Staubfilters angeordneten Saugmundstück hindurch, durch welches die von der Druckluft auf einem Teil des Filterumfangs abgelösten Staub- und Faserpartikel abgesaugt werden. Das Absaugen der abgelösten Feststoffpartikel hat jedoch den Nachteil, daß erneut ein staubbeladener Abgasstrom entsteht, der in einem nachgeschalteten Abscheider gereinigt werden muß, so daß der Aufwand und die Kosten für eine derartige Anordnung relativ hoch sind.

Weiter sind bereits Produktabscheider in Form eines aufrechtstehenden Zylinders bekannt, der im Inneren ein mit Düsen versehenes Spülluftrohr aufweist, das von einer der beiden Stirnseiten her in axialer Richtung in den Produktabscheider ragt und in Umfangsrichtung an seiner Innenseite vorbeibewegt werden kann, um jeweils einen Teil des Filterumfangs durch Druckluft zu reinigen, wie beispielsweise in der DE-A 23 37 980 beschrieben. Der jeweils mit Druckluft beaufschlagte Teil des Filterumfangs weist dort horizontal zur Seite hin, so daß die abgelösten Feststoffpartikel von der Druckluft im wesentlichen im rechten Winkel in den an der Außenseite des Filters nach oben strömenden Gasstrom eingetragen werden. Dadurch wird ein verhältnismäßig großer Anteil der abgereinigten Feststoffpartikel vom Gasstrom wieder mit nach oben geführt, so daß er nicht in den Auffangbehälter gelangt und die Reinigungsleistung relativ gering ist.

Ausgehend hiervon liegt der Erfindung die Aufgabe zugrunde, bei einem Produktabscheider der eingangs genannten Art die Reinigungswirkung zu verbessern.

Diese Aufgabe wird erfindungsgemäß durch die im kennzeichnenden Teil des Patentanspruchs 1 charakterisierten Merkmale gelöst. Demnach zeichnet sich der erfindungsgemäße Produktabscheider dadurch aus, daß die Filterpatrone um eine im wesentlichen horizontale Drehachse drehbar ist, daß die Reinigungsdruckluft jeweils nur einem Teil ihres Umfangs zugeführt wird, und daß dieser Teil unter einem spitzen Winkel zum Gasstrom schräg nach unten weist. Durch die erfindungsgemäße Merkmalskombination lassen sich die abgereinigten Feststoffpartikel über die gesamte Länge der Filterpatrone gleichmäßig und durch die Schwerkraft unterstützt gezielt in einer Richtung abführen, in der ein erneutes Absetzen der Feststoffpartikel auf der Filterpatrone oder einer benachbarten Filterpatrone vermieden werden kann. Damit können die Filterpatronen enger beieinander angeordnet werden, so daß bei gleicher Baugröße eine Vergrößerung der Filterfläche möglich ist.

Verglichen mit einer gleichzeitigen Abreinigung des gesamten Filterpatronenumfangs besteht ein weiterer Vorteil der Erfindung darin, daß zur Reinigung nur eines Teils des Filterpatronenumfangs ein schwächerer Druckluftimpuls ausreichend ist, so daß im Anschluß an die Impulsreinigung weniger Feinststaubpartikel durch die freiwerdenden, vom Druckluftimpuls etwas aufgeweiteten Filteröffnungen hindurchtreten. Damit kann der Feinststaubgehalt der Reinluft verringert werden, was insbesondere bei toxischen Stäuben von großer Bedeutung ist.

Eine besonders bevorzugte Ausgestaltung der Erfindung sieht vor, daß der mit der Reinigungsdruckluft beaufschlagbare Umfangsteil zum Gasstrom hin ausgerichtet ist, so daß die bei der Reinigung vom Filtermaterial der Filterpatrone gelösten Feststoffpartikel durch die Reinigungsdruckluft in den staubbeladenen Gasstrom eingetragen und von diesem nach unten in einen unterhalb der Filterpatronen angeordneten unteren Teil des Gehäuses transportiert werden können, in dem sich gemäß einer weiteren bevorzugten Ausgestaltung der Erfindung der Strömungsquerschnitt vergrößert und der Gasstrom umgelenkt wird, um das Sedimentieren der Feststoffpartikel in einem im untersten Teil des Gehäuses angeordneten Sammelbehälter zu erleichtern.

Um zu verhindern, daß ein Teil der von der Filterpatrone gelösten Feststoffpartikel, insbesondere Feinststaubpartikel, trotz der Umlenkung und Verlangsamung des Gasstroms im Gehäuseunterteil wieder nach oben zu der oder den Filterpatronen mitgerissen wird, kann alternativ dazu der mit der Reinigungsdruckluft beaufschlagbare Umfangsteil auch vom Gasstrom weg zu einem Einlaß eines Auffangbehälters hin ausgerichtet sein. Dieser Einlaß ist vorzugsweise mit einer Klappe versehen, die den vom Gehäuseinneren getrennten Auffangbehälter normalerweise verschließt, so daß der Gasstrom nicht in den Auffangbehälter gelangt. Die Klappe ist vorzugsweise so ausgebildet, daß sie durch ihr Eigengewicht geschlossen gehalten wird und jeweils bei der Reinigung eines Umfangsteils der Filterpatrone von der staubbeladenen Reinigungsdruckluft aufgedrückt wird, wobei diese zusammen mit den abgereinigten Feststoffpartikeln in den Auffangbehälter strömt.

Gemäß einer weiteren bevorzugten Ausgestaltung der Erfindung wird der mit Feststoffpartikeln beladene Gasstrom auf einer Umfangsseite der Filterpatrone zwischen dieser und einer benachbarten Wand des Filtergehäuses, zwischen paarweise nebeneinander angeordneten Filterpatronen und/oder an mindestens zwei übereinander angeordneten Filterpatronen vorbei in den unteren Teil des Gehäuses geführt, bevor er nach seiner Umlenkung wieder nach oben strömt und durch das Filtermaterial der Filterpatronen hindurch aus dem Gehäuse austritt.

Um zu verhindern, daß der in das Gehäuse eintretende Gasstrom den kürzesten Weg zu den Filterpatronen nimmt, sind gemäß einer weiteren bevorzugten Ausgestaltung der Erfindung innerhalb des Gehäuses Leitbleche vorgesehen, die zwischen den Filterpatronen und dem Gasstrom angeordnet sind und den Gasstrom mindestens teilweise an den Filterpatronen vorbei nach unten lenken. Um zu gewährleisten, daß sich die Reinigungsdruckluft mit den mitgerissenen Feststoffpartikeln ungehindert mit dem produktbeladenen Gasstrom vermischt, enden die Leitbleche zweckmäßig etwa in radialer Verlängerung der oberen Begrenzung des mit Druckluft beaufschlagbaren Umfangssektors oder knapp darüber.

Um zu vermeiden, daß während der Abreinigung ein Teil des Gasstroms am unteren Ende der Leitbleche umgelenkt wird und der Strömung der Reinigungsdruckluft entgegenwirkt, ist die Menge der zugeführten Reinigungsdruckluft so eingestellt, daß ihre Strömungsgeschwindigkeit an der Einmündung in den Gasstrom ein Mehrfaches der Strömungsgeschwindigkeit des Gasstroms beträgt.

Eine starke Verwirbelung der Reinigungsdruckluft und des Gasstroms wird gemäß einer weiteren vorteilhaften Ausgestaltung der Erfindung dadurch vermieden, daß sich der verfügbare Strömungsquerschnitt für die Reinigungsdruckluft vor der Einmündung in den Gasstrom verengt, so daß die Reinigungsdruckluft beschleunigt wird und den Gasstrom nach Art einer Venturidüse mitreißt. Die Verengung erfolgt vorzugsweise mit Hilfe eines zum Gasstrom hin schräg nach unten weisenden Ablenkblechs, das unterhalb des mit Reinigungsdruckluft beaufschlagbaren Umfangssektors der Filterpatrone angeordnet ist und gleichzeitig verhindert, daß ein Teil der abgereinigten Feststoffpartikel auf die Oberseite einer darunter angeordneten Filterpatrone gelangt. Das Ablenkblech begrenzt zusammen mit dem unteren Ende des Leitblechs einen zum Gasstrom hin konvergierenden Strömungskanal, der eine Beschleunigung der Reinigungsdruckluft zur Folge hat. Bei Verwendung mehrerer neben- und übereinander angeordneter Filterpatronen werden außerdem zweckmäßig jeweils zwei paarweise nebeneinander auf beiden Seiten des Gasstroms angeordnete Filterpatronen gleichzeitig mit Druckluft beaufschlagt, um den Druckluftstrahl an der Einmündung in den Gasstrom zu verstärken und eine Ablenkung in Richtung der jeweils anderen Filterpatrone zu verhindern.

Um ein Abführen der abgereinigten Feststoffpartikel ohne das Erfordernis eines weiteren Produktabscheiders und ohne eine Speicherung der abgereinigten Feststoffpartikel im Gehäuse zu ermöglichen, ist gemäß einer weiteren vorteilhaften Ausgestaltung der Erfindung am unteren Ende des Sammelbehälters und ggf. des Auffangbehälters ein Produktaustrag mit einer Schleuse vorgesehen, die vorzugsweise als Zellenradschleuse ausgebildet ist und entweder bei kleineren Druckdifferenzen am unteren Ende des Auffangbehälters oder bei größeren Druckdifferenzen am Austragsende eines dort angebrachten Schneckenförderers angeordnet sein kann.

Als Drehantrieb für die Filterpatrone kann zweckmäßig ein Schrittmotor oder ein Schwenkzylinder verwendet werden, der die Filterpatrone in vorbestimmten Zeitabständen jeweils um einen vorgegebenen Winkel dreht.

Eine weitere vorteilhafte Ausgestaltung der Erfindung sieht vor, daß die Druckluft zum Reinigen des Filtermaterials über ein stationäres Spülluftrohr einem Umfangsteil oder -sektor der Filterpatrone zugeführt wird, der zweckmäßig zwischen 1/6 bis 1/20 und vorzugsweise zwischen 1/10 bis 1/12 des Umfangs der Filterpatrone überdeckt. Das Spülluftrohr ragt zweckmäßig durch eine stirnseitige Reinluftaustrittsöffnung der Filterpatrone ins Filterinnere und erstreckt sich vorzugsweise auf oder unterhalb der Drehachse der Filterpatrone in einem Abstand von den inneren Enden der Filtertaschen in axialer Richtung, wobei es schräg nach unten weisende Luftöffnungen in Form von Bohrungen oder Schlitzen aufweisen kann. Ein zwischen dem Spülluftrohr und einer Druckluftquelle angeordnetes, vorzugsweise über den Drehantrieb der Filterpatrone angesteuertes Ventil sorgt dafür, daß das Spülluftrohr immer dann mit Druckluft beaufschlagt wird, wenn sich die Filterpatrone um einen vorbestimmten Drehwinkel gedreht hat, der vorzugsweise etwa dem Öffnungswinkel des mit Druckluft beaufschlagbaren Umfangssektors entspricht.

Im folgenden wird die Erfindung anhand einiger in der Zeichnung dargestellter Ausführungsbeispiele näher erläutert. Es zeigen:
Fig. 1: eine teilweise geschnittene Seitenansicht eines erfindungsgemäßen Produktabscheiders;
Fig. 2: eine vertikale Querschnittsansicht des Produktabscheiders entlang der Linie II-II der Fig. 1;
Fig. 3: eine Querschnittsansicht eines anderen, in Modulbauweise hergestellten Produktabscheiders mit vier Filterpatronen;
Fig. 4: eine Querschnittsansicht eines noch weiteren Produktabscheiders in Modulbauweise mit acht Filterpatronen;
Fig. 5: eine Querschnittsansicht eines Produktabscheiders mit vier Filterpatronen, deren mit Reinigungsdruckluft beaufschlagte Umfangsteile jeweils einem Einlaß eines Auffangbehälters gegenüberliegen.

Die in den Zeichnungen dargestellten Produktabscheider 2 dienen zur Abscheidung gröberer und feinerer Feststoffpartikel aus einem produktbeladenen Luftstrom, der von einem reinluftseitig angeordneten Gebläse 4 durch den Produktabscheider 2 gesaugt wird, jedoch zum Beispiel bei der pneumatischen Befüllung von Schüttgutbehältern alternativ auch durch den Produktabscheider 2 gedrückt werden kann.

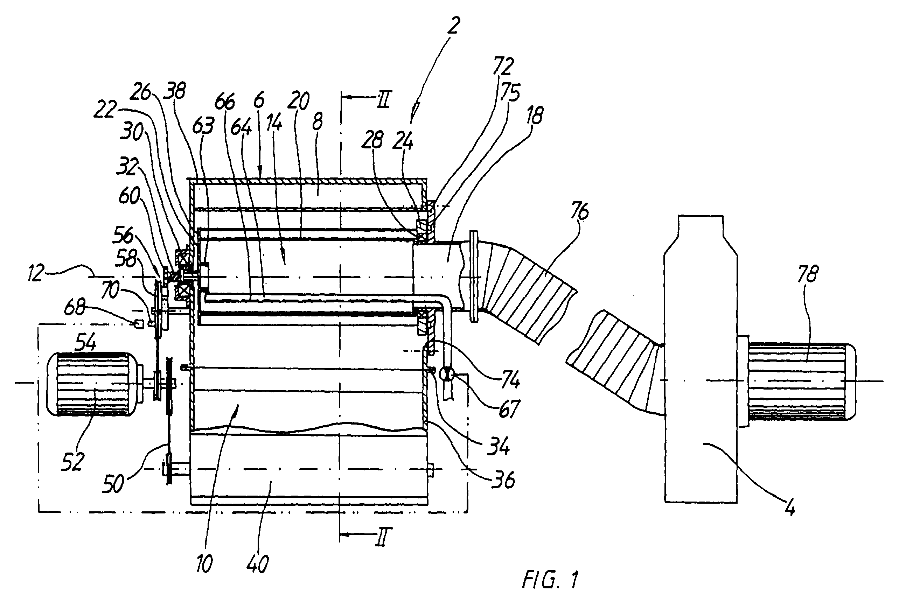

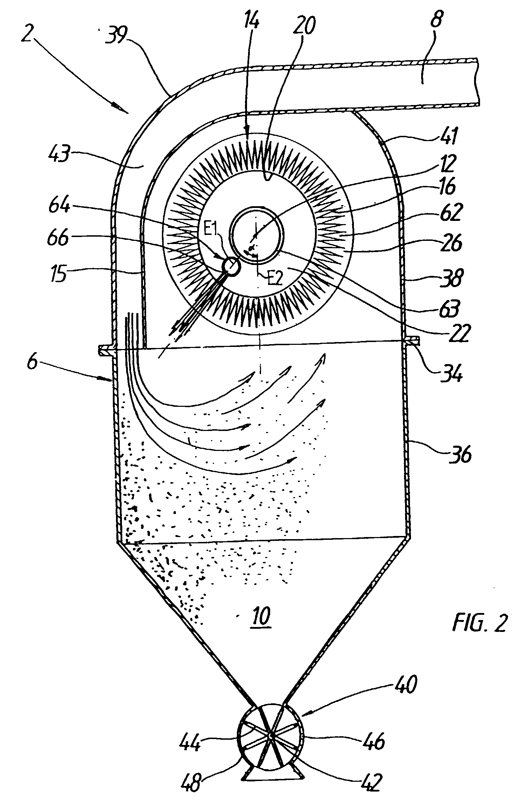

Der in den Figuren 1 und 2 dargestellte Produktabscheider 2 besteht im wesentlichen aus einem geschlossenen Gehäuse 6 mit einem an seinem oberen Ende angeordneten Lufteinlaß 8 für den produktbeladenen Luftstrom, einem vom unteren Teil des Gehäuses 6 gebildeten Sammelbehälter 10 für sedimentierte Feststoffpartikel und einer innerhalb des Gehäuses 6 um eine horizontale Drehachse 12 drehbar gelagerten zylindrischen Filterpatrone 14. Im Inneren des Gehäuses 6 ist weiter ein Leitblech 15 angeordnet, das den Luftstrom hinter dem Lufteinlaß 8 in Umfangsrichtung der Filterpatrone 14 an dieser vorbei in den unteren Teil des Gehäuses 6 lenkt, wo sich der Strömungsquerschnitt erweitert und der Luftstrom wieder nach oben umgelenkt wird, so daß infolge der Abnahme der Strömungsgeschwindigkeit und der Trägheit der nach unten mitgerissenen Feststoffpartikel ein Teil derselben in den im untersten Teil des Gehäuses 6 angeordneten Sammelbehälter 10 fällt. Der umgelenkte Luftstrom mit den noch enthaltenen Feststoffpartikeln steigt hinter dem Leitblech 15 im Gehäuse nach oben und tritt dann von außen nach innen durch das sternförmig gefaltete Filtermaterial 16 auf dem Umfang der Filterpatrone 14 hindurch, bevor er nach der Abscheidung der Feststoffpartikel auf der Außenseite des Filtermaterials 16 durch ein offenes Stirnende der Filterpatrone 14 und einen Luftaustrittsstutzen 18 aus dem Gehäuse 6 heraus und zum Gebläse 4 geführt wird, von wo aus er in die Umgebung austritt oder für eine erneute Beladung mit Feststoffpartikeln im Kreislauf zurückgeführt wird.

Die Filterpatrone 14 besteht im wesentlichen aus einem zylindrischen Filterkorb 20 aus einem stabilen Lochblech oder Drahtgewebe mit einem geschlossenen Boden 22, sowie dem sternförmig gefalteten, um die Außenseite des Filterkorbs 20 herumgelegten Filtermaterial 16, das beispielsweise aus einem Polyestervlies besteht und zwischen zwei am Boden 22 bzw. am offenen Ende der Staubfilterpatrone 14 in radialer Richtung über den Filterkorb 20 nach außen überstehenden Umfangsflanschen 24, 26 beispielsweise durch Eingießen in ein Vergußmaterial befestigt ist. Um ein Zusammenkleben einzelner Falten des sternförmigen Filtermaterials 16 zu verhindern, können in radialer Richtung über den Filterkorb 20 überstehende und in die Falten eingreifende Separatoren vorgesehen sein, oder das Filtermaterial 16 kann mit eingeprägten stegförmigen Auswölbungen versehen sein, die über gegenüberliegende Seiten der durch die Faltung gebildeten V-förmigen Filtertaschen überstehen und diese aufgespreizt halten (nicht dargestellt). Zum Beispiel im Lebensmittelbereich oder zur Abscheidung heißer Stäube können alternativ auch Filterpatronen 14 eingesetzt werden, bei denen das Filtermaterial 16 aus einem Edelstahlgewebe besteht.

Bei der Filterpatrone 14 handelt es sich um eine handelsübliche Filterpatrone, die dahingehend abgewandelt worden ist, daß der Umfangsflansch 24 an ihrem offenen Stirnende mit einer Ausdrehung zur Aufnahme eines als Drehlager dienenden, auf dem Luftaustrittsstutzen 18 angebrachten Wälzlagers 28 versehen ist, während sie an ihrem geschlossenen Stirnende einen über ihren Boden 22 überstehenden Wellenstumpf 30 aufweist, der sich in einer vorgegebenen Ausrichtung drehfest in eine formschlüssig angepaßte Wellenbuchse 32 einführen läßt, welche gegenüber der angrenzenden Gehäusewand drehbar gelagert ist.

Das aus Stahlblech bestehende Gehäuse 6 des Produktabscheiders 2 besteht im wesentlichen aus zwei entlang einer horizontalen Flanschverbindung 34 verschraubten Gehäuseteilen 36, 38, von denen der untere Gehäuseteil 36 mit seinem trichterförmigen Unterteil den Sammelbehälter 10 für die aus dem Luftstrom abgeschiedenen Feststoffpartikel bildet, während der obere Gehäuseteil 38 die Filterpatrone 14 beherbergt.

Der Sammelbehälter 10 mündet an seinem unteren Ende in einen als Zellenradschleuse 40 ausgebildeten Produktaustrag, aus dem die Feststoffpartikel nach unten in einen Transportbehälter (nicht dargestellt) fallen. Die Zellenradschleuse 40 kann vereinfacht ausgebildet sein und mehrere in gleichen Winkelabständen radial über eine Zellenradantriebswelle 42 überstehende stegartige Flügel 44 umfassen, die an ihren äußeren Enden zur Abdichtung gegenüber den teilzylindrischen Schleusenwänden 46 mit gummielastischen Dichtleisten 48 versehen sind.

Die Zellenradantriebswelle 42 steht über die dem Boden 22 der Filterpatrone 14 benachbarte Gehäusewand über und wird über einen Zahnriementrieb 50 von einem Getriebemotor 52 angetrieben, der über einen weiteren Zahnriementrieb 54 und ein Triebschaltwerk 56 die Filterpatrone 14 um deren zur Zellenradantriebswelle 42 parallele Drehachse 12 dreht.

Die Übersetzungsverhältnisse der beiden Zahnriementriebe 50, 54 und das Triebschaltwerk 56 sind so aneinander angepaßt, daß sich die Zellenradantriebswelle 42 mit etwa 25 U/min dreht, während die Filterpatrone 14 vom Triebschaltwerk 56 etwa alle 10 bis 15 s um 30 Grad weitergedreht wird. Bei einer Abtriebsdrehzahl des Getriebemotors 52 von etwa 10 U/min dreht sich eine vom Riementrieb 54 getriebene Zahnriemenscheibe 58 bei einem Übersetzungsverhältnis des Riementriebs 54 von 2,5:1 mit 4 U/min, wobei sich bei jeder Umdrehung der Zahnriemenscheibe 58 ein drehfest mit der Wellenbuchse 32 verbundenes Schaltrad 60 des Triebschaltwerks 56 um 30 Grad weiterbewegt.

Der obere Gehäuseteil 38 weist im Querschnitt (Fig. 2) nach innen zu konkav gerundete obere und seitliche Begrenzungswände 39, 41 auf, die teilweise zur Drehachse 12 der Filterpatrone 14 konzentrisch sind. Das Leitblech 15 erstreckt sich vom Lufteinlaß 8 aus in einem vorgegebenen Abstand parallel zur einen 39 der beiden Begrenzungswände 39, 41 bis zum unteren Ende des Gehäuseteils 38, so daß die in das Gehäuse 6 eintretende produktbeladene Luft durch den zwischen der Begrenzungswand 39 und dem Leitblech 15 gebildeten gebogenen Kanal 43 an der Filterpatrone 14 vorbei nach unten strömt, wobei sich die schwereren Feststoffpartikel aufgrund von Zentrifugalkräften im Luftstrom nach außen bewegen, so daß sie nach dem Austritt aus dem Kanal 43 aufgrund ihrer nach unten gerichteten Bewegungskomponente und der plötzlich abnehmenden Luftgeschwindigkeit direkt nach unten in den Auffangbehälter 10 fallen. Demgegenüber werden die kleineren und leichteren Feststoffpartikel von dem im unteren Gehäuseteil 36 expandierenden und nach oben zur Filterpatrone 14 umgelenkten aufsteigenden Luftstrom mitgeführt und bei dessen Hindurchtritt durch das Filtermaterial 16 abgeschieden.

Die abgeschiedenen Feststoffpartikel werden dabei in radial nach außen divergierenden V-förmigen Filtertaschen 62 auf der Außenseite der Filterpatrone 14 zurückgehalten, die durch die sternförmige Faltung des Filtermaterials 16 gebildet werden. Um ein Zusetzen der Filteröffnungen des Filtermaterials 16 mit zunehmender Partikelbeladung zu verhindern und eine gleichbleibende Filterwirkung sicherzustellen, werden die Filtertaschen 62 periodisch mit Druckluft gereinigt, wobei jeweils mehrere benachbarte Filtertaschen 62 gleichzeitig von der Innenseite der Filterpatrone 14 her im Gegenstrom mit Druckluft beaufschlagt werden, d.h. entgegen der Strömungsrichtung bei der Abscheidung der Feststoffpartikel. Bei der Reinigung wird jeweils in vorgegebenen Zeitabständen ein schräg nach unten in Richtung des Luftstroms weisender Sektor des Filtermaterials 16 von innen her stoßweise oder kontinuierlich mit Druckluft angeblasen, so daß diese mit hoher Geschwindigkeit durch das Filtermaterial 16 strömt und die auf der Außenseite anhaftenden Feststoffpartikel mitreißt und/oder das Filtermaterial 16 in Schwingungen versetzt und dadurch für eine Ablösung der Feststoffpartikel sorgt.

Die Druckluft wird durch ein stationäres Spülluftrohr 64 zugeführt, welches durch den Luftaustrittsstutzen 18 ins Innere der Filterpatrone 14 ragt, sich schräg unterhalb der Drehachse 12 der Filterpatrone 14 in axialer Richtung derselben erstreckt und in einem geringen Abstand vom Boden 22 endet. Zur Stabilisierung und zum Auffangen von Rückstoßkräften beim Austritt der Druckluft stützt sich das Spülluftrohr 64 mit seinem Ende an einem über den Boden 22 der Filterpatrone 14 überstehenden Ring 63 ab, an dem es bei der Drehung der Filterpatrone 14 entlanggleitet. Der Winkel α zwischen einer Ebene E1 durch die Drehachse 12 und die Mitte des Spülluftrohrs 64 und einer Vertikalebene E2, parallel zu welcher der Luftstrom im Gehäuse 6 nach unten geführt wird, liegt erfindungsgemäß zwischen 0 und 90 Grad und beträgt hier etwa 40 Grad (Fig. 2).

Das Spülluftrohr 64 weist eine oder mehr Reihen von schlitzförmigen, in kurzen Abständen hintereinander in Längsrichtung des Spülluftrohrs 64 verlaufenden Luftaustrittsöffnungen 66 auf, welche die Wand des Spülluftrohrs 64 in radialer Richtung durchsetzen. Die Luftaustrittsöffnungen 66 sind so ausgerichtet, daß sie im wesentlichen in der Ebene durch die Drehachse 12 und die Mitte des Spülluftrohrs 64 schräg nach unten in Richtung des unteren Endes des Luftkanals 43 weisen, so daß sich die ausströmende Druckluft nach dem Hindurchtritt durch eine Gruppe von nach innen offenen V-förmigen Falten des Filtermaterials 16 zusammen mit den dabei mitgerissenen abgereinigten Feststoffpartikeln unter einem spitzen Winkel mit dem abwärtsgerichteten Luftstrom mischt.

Bedingt durch den Umfangswinkel der Luftaustrittsöffnungen 66 und die Divergenz des Druckluftstrahls zwischen den Austrittsöffnungen 66 und dem Filtermaterial 16 erstreckt sich der jeweils von der Druckluft beaufschlagte Umfangssektor der Filterpatrone 14 über etwa 30 Grad, wobei dieser Winkel dem Drehwinkel entspricht, um den die Filterpatrone 14 über den Riementrieb 54 und das Triebschaltwerk 56 schrittweise mit gleichbleibender Drehrichtung gedreht wird, bevor jeweils das Spülluftrohr 64 erneut mit Druckluft beaufschlagt wird.

Zur Synchronisierung der Druckluftzufuhr mit der schrittweisen Drehbewegung der Filterpatrone 14 ist das Spülluftrohr 64 außerhalb des Luftaustrittsstutzens 18 mit einem Magnetventil 67 versehen, das über einen vom Drehantrieb der Filterpatrone 14 aktivierten Signalgeber 68 angesteuert wird. Der Signalgeber 68 kann beispielsweise als Näherungsschalter ausgebildet sein, der in geringem Abstand von der Stirnseite der Zahnriemenscheibe 58 angeordnet ist und jeweils ein Schaltsignal liefert, wenn sich ein auf der Zahnriemenscheibe 58 befestigter Dauermagnet 70 vor dem Signalgeber 68 vorbeibewegt. Das zum Magnetventil 67 zugeführte Schaltsignal öffnet jeweils nach einem Verdrehen der Filterpatrone 14 um etwa 30 Grad für 60 bis 200 ms die Druckluftzufuhr, wobei die Impulsdauer der Druckluftstroms durch eine an sich bekannte Schaltung eingestellt wird.

Der Luftaustrittsstutzen 18 weist einen in radialer Richtung überstehenden Flansch 72 auf, der um eine Filterpatronen-Austauschöffnung 74 herum gegen die Außenseite des Gehäuses 6 anliegt und mit dem Gehäuse 6 verschraubt ist. Um einen schnellen Austausch der Filterpatrone 14 zu ermöglichen, ist der Luftaustrittsstutzen 18 über ein flexibles Rohrstück 76 mit dem nachgeschalteten, von einem Motor 78 angetriebenen Gebläse 4 verbunden, so daß er sich nach einem Lösen der Befestigungsschrauben zusammen mit dem flexible Rohrstück 76 zu Seite bewegen läßt. Nach einem Abnehmen des Luftaustrittsstutzens 18 kann die Filterpatrone 14 durch die Austauschöffnung 74 aus dem Gehäuse 6 herausgezogen und an ihrer Stelle eine neue Patrone 14 eingesetzt werden. Um das Abnehmen des Luftaustrittsstutzens 18 zu beschleunigen, kann dieser statt mit Befestigungsschrauben auch mit Schnellverschlüssen am Gehäuse 6 befestigt sein.

Um ein Ansaugen von staubbelasteter Luft aus dem Gehäuse 6 in den Luftaustrittsstutzen 18 durch einen radialen Spalt zwischen dem Umfangsflansch 24 der Filterpatrone 14 und dem Flansch 72 des Luftaustrittsstutzens 18 zu verhindern, weist der Flansch 72 in der Nähe des Drehlagers eine zum Umfangsflansch 24 der Filterpatrone 14 hin offene umlaufende Spülluftnut 75 auf. Die Spülluftnut 75 wird über eine Zuleitung (nicht dargestellt) kontinuierlich mit Druckluft beaufschlagt, deren Druck höher als der Druck im Inneren des Gehäuses 6 ist. Alternativ dazu könnte die Spülluftnut 75 oder wegen der niedrigen Drehgeschwindigkeiten ggf. auch eine Teflondichtung zwischen zwei einander gegenüberliegenden Umfangsflächen der Filterpatrone 14 und des Luftaustrittsstutzens 18 filterseitig des Wälzlagers 28 angeordnet sein.

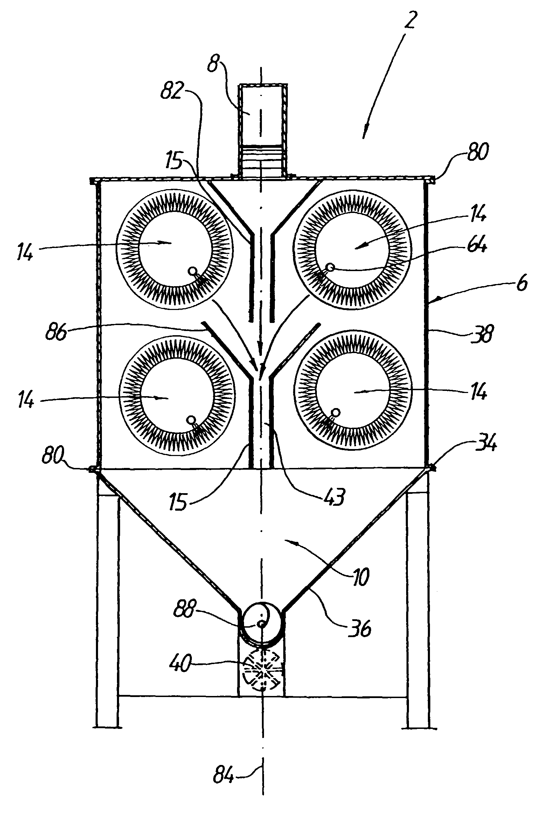

Im Unterschied zu dem in den Figuren 1 und 2 dargestellten Produktabscheider 2 sind die in den Figuren 3, 4 und 5 dargestellten Produktabscheider 2 in Modulbauweise gefertigt und weisen zur Vergrößerung der Filterfläche zwei bzw. vier Paare von Filterpatronen 14 auf, die jeweils mit parallelen Drehachsen 12 vertikal übereinander in einem bzw. zwei modulartigen oberen Gehäuseteilen 38 angeordnet sind, welche sich durch obere und untere Flansche 80 in beliebiger Anzahl übereinander mit einem unteren Gehäuseteil 36 und einem Gehäusedeckel 82 verbinden lassen.

Der Lufteinlaß 8 ist so angeordnet, daß die von vorne oder von der Seite her zugeführte Luft ggf. nach einer Unterteilung in mehrere Teilströme über die Tiefe des Gehäuses 6 von oben her in dieses eintritt und in der Mitte zwischen den übereinander angeordneten Paaren von Filterpatronen 14 nach unten strömt. In jedem oberen Gehäuseteil 38 sind zwischen den zur Zeichnungsebene parallelen entgegengesetzten Stirnwänden zwei Paare von Luftleitblechen 15 symmetrisch zu einer Mittelebene 84 angebracht, welche den Luftstrom an den Filterpatronen 14 vorbei nach unten in den als Sammelbehälter 10 ausgebildeten trichterförmigen unteren Gehäuseteil 36 lenken. Dort wird der Luftstrom durch das Druckgefälle nach oben umgelenkt und gleichzeitig infolge der größeren Strömungsquerschnitte seine Strömungsgeschwindigkeit verlangsamt, so daß ein Teil der mitgeführten Feststoffpartikel im Sammelbehälter 10 sedimentiert.

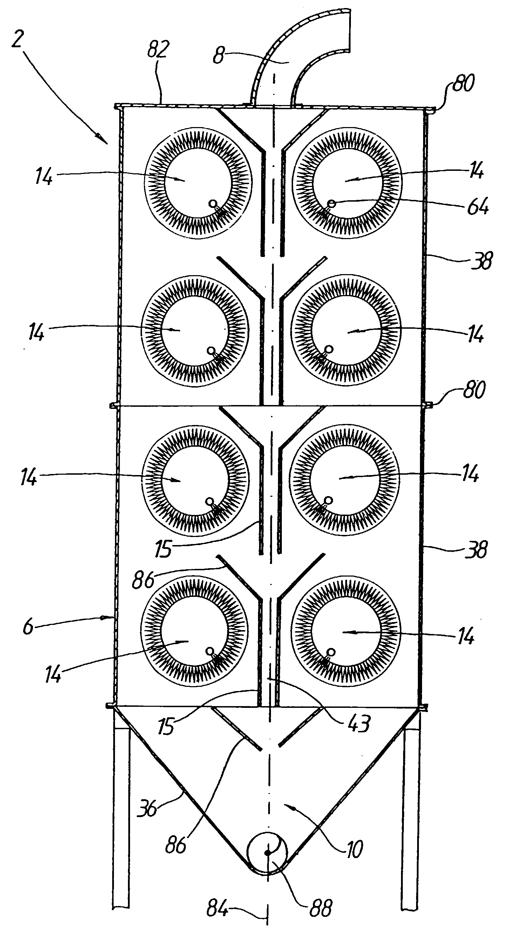

Wie bei dem Produktabscheider 2 aus Fig. 1 ist auch bei den in den Figuren 3 und 4 dargestellten Produktabscheidern 2 der mit der Reinigungsdruckluft beaufschlagbare Umfangsteil der Filterpatrone 14 schräg nach unten zum Gasstrom hin ausgerichtet. Die Luftleitbleche 15 enden dort jeweils schräg unterhalb der Filterpatronen 14, so daß sich die beim Reinigen der Filterpatronen 14 aus dem Spülluftrohr 64 ausgestoßene, durch das Filtermaterial 16 hindurchgetretene Reinigungsdruckluft mit den gelösten Feststoffpartikeln ungehindert mit dem abwärtsgeführten Luftstrom vermischen kann. Um ein Ablenken des Druckluftstrahls in Richtung der jeweils gegenüberliegenden Filterpatrone 14 zu verhindern, werden die paarweise nebeneinander auf entgegengesetzten Seiten des Luftstroms angeordneten Filterpatronen 14 immer gleichzeitig mit Druckluft beaufschlagt. Da die Strömungsgeschwindigkeit der Druckluft im Vergleich zu derjenigen des produktbeladenen Luftstroms erheblich höher ist, etwa 40 m/s gegenüber etwa 5 m/s, wird die im Gehäuse 6 nach unten strömende Luft von der Druckluft beschleunigt und Turbulenzen im Bereich der Einmündung des Druckluftstrahls in den Luftstrom vermieden. Die nach unten gerichtete Sogwirkung der Druckluft wird durch Ablenkbleche 86 verstärkt, die von den oberen Enden der Luftleitbleche 15 aus weg vom Luftstrom schräg nach oben weisen. Die Ablenkbleche 86 bewirken eine Verjüngung des Strömungskanals der Druckluft zwischen dem unteren Ende der benachbarten Luftleitbleche 15 und dem Ablenkblech 86. Außerdem überdecken sie einen Teil des darunter angeordneten Luftfilters 14, so daß vermieden wird, daß der Druckluftstrahl infolge der Sogwirkung des Gebläses 4 umgelenkt und die Feststoffpartikel auf dieser Filterpatrone 14 abgelagert werden.

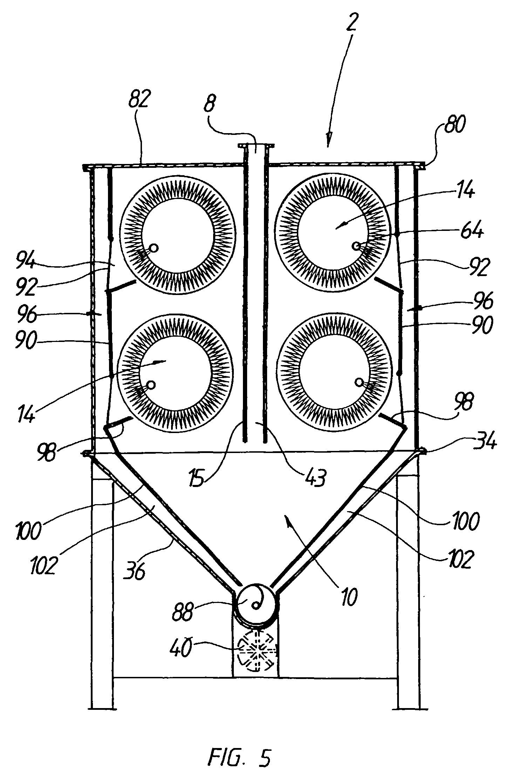

Im Gegensatz dazu weist bei dem in Fig. 5 dargestellten Produktabscheider 2 der mit der Reinigungsdruckluft beaufschlagbare Umfangsteil der vier Filterpatronen 14 vom Gasstrom weg schräg nach unten und außen in Richtung zweier Trennwände 90, die in einem kleinen Abstand parallel zu den entgegengesetzten Längsseitenwänden des oberen Gehäuseteils 38 über dessen gesamte Höhe verlaufen und jeweils innerhalb des Gehäuses 6 einen separaten Auffangbehälter 96 für die abgereinigten Feststoffpartikel von dem vom Luftstrom durchströmten Teil des Gehäuses 6 trennen. Die beiden Trennwände 90 weisen jeweils zwei zu den Filterpatronen 14 parallele langgestreckte Einlaßöffnungen 92 auf, die den mit Reinigungsdruckluft beaufschlagten Umfangsteilen der Filterpatronen 14 gegenüberliegen und jeweils durch eine Verschlußklappe 94 verschlossen sind. Am unteren Ende der Einlaßöffnungen 92 sind schräge Leitbleche 98 angeordnet, die sich in Richtung der Filterpatronen 14 erstrecken. Die Leitbleche 98 dienen zum einen dazu, die Reinigungsdruckluft besser in Richtung der Einlaßöffnungen 92 zu lenken und bilden zum anderen eine Auflagefläche für die unteren Enden der Verschlußklappen 94, die am oberen Rand der Einlaßöffnungen 92 schwenkbar aufgehängt sind. Die Verschlußklappen 94 sind so bemessen, daß sie in dem in Fig. 5 dargestellten Ruhezustand etwas nach unten und außen, d.h. weg von den Filterpatronen 14 geneigt sind, so daß ihr unteres Ende durch das Eigengewicht der Verschlußklappe 94 gegen die Oberseite des Leitblechs 98 angedrückt und damit die Einlaßöffnung 92 selbsttätig verschlossen wird. Beim Beaufschlagen der Spülluftrohre 64 mit Reinigungsdruckluft werden die Verschlußklappen 94 von der Druckluft aufgestoßen, so daß die Reinigungsdruckluft mit den abgereinigten Feststoffpartikeln in die Auffangbehälter 96 strömt. Die übereinander angeordneten Filterpatronen 14 werden zweckmäßig nacheinander mit Druckluft beaufschlagt, so daß jeweils nur eine Einlaßöffnung 92 für kurze Zeit offen ist.

Die Auffangbehälter 96 münden an ihrem offenen unteren Ende jeweils in einen als Sammelbehälter dienenden, durch Trennwände 100 abgetrennten Teil 102 des unteren Gehäuseteils 36, in dem sie sedimentieren und durch ihre Schwerkraft zum unteren Ende des trichterförmigen Gehäuseteils 36 rutschen. Die Trennwände 100 können mit kleinen Luftöffnungen versehen sein, um ein Entweichen der Reinigungsdruckluft durch die Trennwände 100 hindurch zu ermöglichen und ein Aufwirbeln der sedimentierten Feststoffpartikel am unteren Ende des trichterförmigen Gehäuseteils 36 zu verhindern.

Bei sämtlichen in den Figuren 2 bis 5 dargestellten Produktabscheidern sind die Filterpatronen 14 mit ihren offenen Stirnenden auf Luftaustrittsstutzen 18 drehbar gelagert, welche in einen durch eine Haube (nicht dargestellt) verschlossenen Raum auf der Außenseite des Gehäuses 6 münden. Dieser Raum ist über ein Verbindungsrohr mit dem Gebläse 4 verbunden und kann weiter Rohre für die Zufuhr von Reinigungsdruckluft in die Spülluftrohre 64 und einen oder mehrere Drehantriebe für die Filterpatronen 14, für die Zellenradschleuse 40 und für eine im unteren Ende des unteren Gehäuseteils 36 angeordnete Förderschnecke 88 enthalten, mit deren Hilfe die Länge der Zellenradschleuse 40 verkürzt werden kann.

## Patentansprüche

1. Produktabscheider zur Abscheidung von Feststoffpartikeln aus einem Gasstrom, mit einem Gehäuse und mindestens einer im Gehäuse angeordneten, vom Gasstrom von außen nach innen durchströmten, im wesentlichen zylindrischen Filterpatrone, wobei mindestens ein Teil des Gasstroms vor dem Hindurchtritt durch die Filterpatrone im Inneren des Gehäuses an der Filterpatrone vorbei nach unten geführt wird, und wobei die Filterpatrone zur Reinigung von innen her mit Druckluft beaufschlagbar ist, dadurch gekennzeichnet, daß die Filterpatrone (14) um eine im wesentlichen horizontale Drehachse (12) drehbar ist, daß die Reinigungsdruckluft jeweils nur einem Teil ihres Umfangs zugeführt wird, und daß dieser Teil unter einem spitzen Winkel zum Gasstrom schräg nach unten weist.

2. Produktabscheider nach Anspruch 1, dadurch gekennzeichnet, daß der mit der Reinigungsdruckluft beaufschlagbare Umfangsteil zum Gasstrom hin ausgerichtet ist.

3. Produktabscheider nach Anspruch 1, dadurch gekennzeichnet, daß der mit der Reinigungsdruckluft beaufschlagbare Umfangsteil weg vom Gasstrom in Richtung einer Einlaßöffnung (92) eines Auffangbehälters (96) weist.

4. Produktabscheider nach Anspruch 3, dadurch gekennzeichnet, daß die Einlaßöffnung (92) des Auffangbehälters (96) normalerweise durch eine Klappe (94) verschlossen ist, die jeweils bei der Reinigung der Filterpatrone (14) von der Reinigungsdruckluft aufgedrückt wird.

5. Produktabscheider nach einem der Ansprüche 1 bis 4, dadurch gekennzeichnet, daß der Gasstrom nach dem Vorbeiführen an der Filterpatrone (14) oder den Filterpatronen (14) nach oben umgelenkt wird.

6. Produktabscheider nach einem der Ansprüche 1 bis 5, dadurch gekennzeichnet, daß sich der Strömungsquerschnitt des Gasstroms nach dem Vorbeiführen an der Filterpatrone (14) oder den Filterpatronen (14) erweitert.

7. Produktabscheider nach Anspruch 5 oder 6, gekennzeichnet durch einen unterhalb der Umlenkung des Gasstroms und/oder der Erweiterung des Strömungsquerschnitts angeordneten Sammelbehälter (10) zur Aufnahme sedimentierter Feststoffpartikel.

8. Produktabscheider nach Anspruch 7, gekennzeichnet durch einen am unteren Ende des Sammelbehälters (10) angeordneten, mit einer Schleuse (40) versehenen Produktaustrag.

9. Produktabscheider nach einem der Ansprüche 1 bis 8, dadurch gekennzeichnet, daß der Gasstrom zwischen paarweise nebeneinander angeordneten Filterpatronen (14) und/oder an mindstens zwei übereinander angeordneten Filterpatronen (14) vorbei nach unten geführt wird.

10. Produktabscheider nach einem der Ansprüche 1 bis 9, dadurch gekennzeichnet, daß zwischen dem Gasstrom und mindestens einem Teil des Umfangs der Filterpatrone (14) ein Leitblech (15) angeordnet ist.

11. Produktabscheider nach einem der Ansprüche 1 bis 10, gekennzeichnet durch mindestens ein Ablenkblech (86), das unterhalb des mit Reinigungsdruckluft beaufschlagbaren Umfangsteils der Filterpatrone (14) angeordnet ist.

12. Produktabscheider nach einem der Ansprüche 1 bis 11, dadurch gekennzeichnet, daß die Filterpatrone (14) schrittweise drehbar ist.

13. Produktabscheider nach einem der Ansprüche 1 bis 12, dadurch gekennzeichnet, daß die Beaufschlagung der Filterpatrone (14) mit Druckluft intermittierend erfolgt.

14. Produktabscheider nach einem der Ansprüche 1 bis 13, dadurch gekennzeichnet, daß die Reinigungsdruckluft über ein ins Innere der Filterpatrone (14) ragendes stationäres Spülluftrohr (64) zugeführt wird, das mindestens eine schräg nach unten weisende Luftaustrittsöffnung (66) aufweist.

15. Produktabscheider nach einem der Ansprüche 1 bis 14, dadurch gekennzeichnet, daß zwei auf entgegengesetzten Seiten des Gasstroms angeordnete Filterpatronen (14) gleichzeitig mit Druckluft beaufschlagbar sind.
